# EUROPEAN PATENT APPLICATION

(11) **EP 4 819 046 A1**
(43) Date of publication of application: **07.10.2026**
(21) Application number: 24902298.9
(22) Date of filing: 27.09.2024
(51) Int. Cl.: G06T 7/73, G06T 5/70, G06V 10/77

(54) **IMAGE PROCESSING METHOD, APPARATUS, DEVICE AND STORAGE MEDIUM**

(30) Priority: 14.12.2023 CN 202311726862
(71) Applicant: Huawei Technologies Co., Ltd., Shenzhen, Guangdong 518129 (CN)
(72) Inventor: LI, Jianhao, Shenzhen, Guangdong 518129 (CN); WANG, Zhongdao, Shenzhen, Guangdong 518129 (CN); XIE, Enze, Shenzhen, Guangdong 518129 (CN); FENG, Bailan, Shenzhen, Guangdong 518129 (CN); ZHANG, Hongbo, Shenzhen, Guangdong 518129 (CN)
(74) Representative: Huawei European IPR
(86) International application number: PCT/CN2024/121760
(87) International publication number: WO 2025/123872

(57) **Abstract**

Embodiments of this application provide an image processing method and apparatus, a device, and a storage medium. The method includes: obtaining a target mask corresponding to a target object in a target image; obtaining a point cloud of the target object in a target point cloud based on the target mask; determining an initial pose of the target object based on the point cloud of the target object, and determining an initial shape of the target object based on shape prior information; and performing optimization processing on the initial pose and the initial shape of the target object based on the target mask and the point cloud of the target object, to obtain a target pose and a target shape of the target object. This application is used for resolving a problem in a conventional technology that an annotation result is unstable and annotation precision is poor when a 3D object is annotated.

## Description

This application claims priority to Chinese Patent Application No. 202311726862.8, filed with the China National Intellectual Property Administration on December 14, 2023 and entitled "IMAGE PROCESSING METHOD AND APPARATUS, DEVICE, AND STORAGE MEDIUM", which is incorporated herein by reference in its entirety.

### TECHNICAL FIELD

This application relates to the field of image processing technologies, and in particular, to an image processing method and apparatus, a device, and a storage medium.

### BACKGROUND

In modern robots and autonomous driving technologies, an existing algorithm needs a large amount of labeled data to train a deep learning model to understand a 3D (3 Dimensions, three-dimensional) scene, especially dynamic objects such as a vehicle and a pedestrian. Therefore, it is urgent to improve a degree of automation of 3D labeling. Current 3D automatic annotation methods can be classified into two categories based on whether a ground truth bounding box is required: (1) Supervised automatic annotation method: Usually, this method needs to obtain a manually annotated 3D bounding box, train a 3D detection model based on the manually annotated 3D bounding box, and finally use the trained model to predict a 3D bounding box of remaining data to implement automatic annotation. However, due to a limitation of a data volume during model training, there is usually a problem of overfitting to a specific dataset when a 3D object is annotated according to this method. Consequently, when data outside data distribution is annotated, generalization performance is poor. (2) Unsupervised automatic annotation method: Compared with the supervised annotation method, the unsupervised automatic annotation method does not need a manually annotated 3D bounding box. However, the unsupervised automatic annotation method lacks an effective supervision signal, and the unsupervised automatic annotation method generates a pseudo label with poor quality and limited practical value. Therefore, when automatic annotation is performed on a 3D object according to the foregoing two methods, there is a problem that an annotation result is unstable or annotation precision is poor.

### SUMMARY

An objective of this application is to provide an image processing method and apparatus, a device, and a storage medium, to resolve a problem in a conventional technology that an annotation result is unstable and annotation precision is poor when a 3D object is annotated.

According to a first aspect, an embodiment of this application provides an image processing method, including: obtaining a target mask corresponding to a target object in a target image; obtaining a point cloud of the target object in a target point cloud based on the target mask; determining an initial pose of the target object based on the point cloud of the target object, and determining an initial shape of the target object based on shape prior information; and performing optimization processing on the initial pose and the initial shape of the target object based on the target mask and the point cloud of the target object, to obtain a target pose and a target shape of the target object.

According to the image processing method provided in this embodiment of this application, the initial pose of the target object is determined based on the point cloud of the target object, and the initial shape of the target object is determined based on the shape prior information. After the initial pose and the initial shape are obtained, the initial pose and the initial shape are optimized based on the target mask and the point cloud of the target object, to obtain the target pose and the target shape of the target object. The initial shape obtained based on the shape prior information has high accuracy, which is helpful to shorten optimization duration. In addition, both the target pose and the target shape obtained through optimization processing based on the initial shape and the initial pose have good data generalization and excellent precision, and precision of the target pose and the target shape obtained according to the image processing method provided in this embodiment of the present invention has good stability.

In an implementation of the first aspect, obtaining the point cloud of the target object in the target point cloud based on the target mask includes: obtaining the target point cloud, where the target point cloud includes information about the target object and an environment in which the target object is located; and segmenting the target point cloud based on the target mask, to obtain the point cloud of the target object.

The point cloud of the object is obtained from the target point cloud based on the target mask, so that accuracy of the point cloud of the target object can be ensured, to obtain a pose of the target object with higher accuracy.

In an implementation of the first aspect, the method further includes: denoising the point cloud of the target object.

The point cloud that is of the target object and that is obtained from the target point cloud based on the target mask includes a noise point cloud, and the point cloud of the target object is denoised, so that accuracy of the pose of the target object can be further improved.

In an implementation of the first aspect, denoising the point cloud of the target object includes: removing a point cloud whose distance from a center point of the point cloud of the target object is greater than a first threshold.

The point cloud whose distance from the center point of the point cloud of the target object is greater than the first threshold is considered as a noise point, so that denoising complexity can be effectively reduced.

In an implementation of the first aspect, obtaining the initial pose of the target object based on the point cloud of the target object includes: performing averaging processing on the point cloud of the target object, to obtain the initial pose of the target object.

It is easy to implement averaging processing on the point cloud of the target object, and accuracy of the obtained initial pose of the target object is high.

In an implementation of the first aspect, the shape prior information includes an SDF value, and the shape prior information is obtained based on a preset dimension reduction algorithm.

The shape prior information can well indicate the initial shape of the target object, which is helpful to reduce complexity of subsequent optimization processing. To reduce complexity of subsequent optimization processing, dimension reduction processing needs to be performed on the SDF value based on the preset dimension reduction algorithm, so that the shape prior information including the SDF value can be obtained.

In an implementation of the first aspect, the dimension reduction algorithm includes a PCA algorithm.

The PCA algorithm is used for dimension reduction processing, which is helpful for implementation.

In an implementation of the first aspect, determining the initial shape of the target object based on the shape prior information includes: using an average shape of the shape prior information as the initial shape of the target object.

The average shape of the shape prior information is used as the initial shape of the target object, so that compatibility of the initial shape of the target object is higher and applicability is better.

In an implementation of the first aspect, performing optimization processing on the initial pose and the initial shape of the target object based on the target mask and the point cloud of the target object, to obtain the target pose and the target shape of the target object includes: determining the initial pose and the initial shape of the target object as a current pose and a current shape of the target object; obtaining a current mask of the target object based on the current pose and the current shape of the target object; obtaining current loss information of the target object based on the current pose and the current shape of the target object, the current mask of the target object, the target mask, and the point cloud of the target object; and when the current loss information of the target object meets a specified condition, determining the current pose and the current shape of the target object as the target pose and the target shape of the target object.

The loss information can well validate a difference between the current shape as well as the current pose and an actual shape as well as an actual pose of the target object.

In an implementation of the first aspect, the loss information includes at least one of mask alignment loss information, point cloud alignment loss information, and height alignment loss information. The mask alignment loss information indicates a distance between the target mask and the current mask of the target object, the point cloud alignment loss information indicates a degree of alignment between an object represented by the current pose and the current shape of the target object and the point cloud of the target object, and the height alignment loss information indicates a distance between a ground and a height at which the current pose and the current shape are located.

To improve accuracy of the target pose and the target shape, the loss information includes at least one of the mask alignment loss information, the point cloud alignment loss information, and the height alignment loss information.

In an implementation of the first aspect, the method further includes: when the current loss information of the target object does not meet the specified condition, updating the current pose and the current shape of the target object based on a preset update manner, and repeating the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

Updating the current pose and the current shape of the target object based on the preset update manner can improve optimization processing efficiency.

In an implementation of the first aspect, obtaining the current mask of the target object based on the current pose and the current shape of the target object includes: obtaining the current mask of the target object based on a differentiable 3D rendering algorithm based on an SDF value, and the current pose and the current shape of the target object.

The differentiable 3D rendering algorithm based on the SDF value can accurately obtain the current mask corresponding to the current shape and the current pose of the target object.

In an implementation of the first aspect, updating the current pose and the current shape of the target object based on the preset update manner includes: updating the current pose and the current shape of the target object by using a preset step size or a preset quantity of steps based on a preset gradient descent algorithm.

The gradient descent algorithm can improve efficiency of optimization processing and shorten duration of optimization processing.

In an implementation of the first aspect, the specified condition is that the loss information corresponding to the target object in the current pose and the current shape is converged.

The loss information corresponding to the target object in the current pose and the current shape is converged, so that accuracy of the target shape and the target pose of the target object can be improved.

In an implementation of the first aspect, the method further includes: annotating the target object based on the target pose and the target shape.

After obtaining the target pose and the target shape, an image processing apparatus may automatically annotate, in target space, the target pose and the target shape that correspond to the target object.

According to a second aspect, an embodiment of this application provides an image processing apparatus, including an obtaining unit and a processing unit. The obtaining unit is configured to obtain a target mask of a target object in a target image. The obtaining unit is further configured to obtain a point cloud of the target object in a target point cloud based on the target mask. The processing unit is configured to: determine an initial pose of the target object based on the point cloud of the target object, and determine an initial shape of the target object based on shape prior information. The processing unit is further configured to perform optimization processing on the initial pose and the initial shape of the target object based on the target mask and the point cloud of the target object, to obtain a target pose and a target shape of the target object.

In a possible implementation of the second aspect, the obtaining unit includes a point cloud obtaining module and a separation module. The point cloud obtaining module is configured to obtain the target point cloud. The separation module is configured to segment the target point cloud based on the target mask, to obtain the point cloud of the target object.

In a possible implementation of the second aspect, the obtaining unit further includes a denoising module. The denoising module is configured to perform denoising processing on an initial point cloud of the target object.

In a possible implementation of the second aspect, the denoising module is further configured to remove a cloud point whose distance from a center point of the point cloud of the target object is greater than a first threshold. In this way, a denoised point cloud of the target object can be obtained.

In a possible implementation of the second aspect, the processing unit is further configured to perform averaging processing on the point cloud of the target object, to obtain the initial pose of the target object.

In a possible implementation of the second aspect, the processing unit is further configured to use an average shape of the shape prior information as the initial shape of the target object.

In a possible implementation of the second aspect, the processing unit is further configured to: determine the initial pose and the initial shape of the target object as a current pose and a current shape of the target object, obtain a current mask of the target object based on the current pose and the current shape of the target object, and obtain current loss information of the target object based on the current pose and the current shape of the target object, the current mask of the target object, the target mask, and the point cloud of the target object. When the current loss information of the target object meets a specified condition, the processing unit determines the current pose and the current shape of the target object as the target pose and the target shape of the target object.

In a possible implementation of the second aspect, the loss information includes at least one of mask alignment loss information, point cloud alignment loss information, and height alignment loss information. The mask alignment loss information indicates a distance between the target mask and the current mask of the target object. The point cloud alignment loss information indicates a distance between the current pose as well as the current shape of the target object and the point cloud of the target object. The height alignment loss information indicates a distance between a ground and a height at which the current pose and the current shape are located.

In a possible implementation of the second aspect, the processing unit is further configured to: when the current loss information of the target object does not meet the specified condition, update the current pose and the current shape of the target object based on a preset update manner, and repeat the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

In a possible implementation of the second aspect, the processing unit is further configured to obtain the current mask of the target object based on a differentiable 3D rendering algorithm based on an SDF value, and the current pose and the current shape of the target object.

In a possible implementation of the second aspect, the processing unit is further configured to update the current pose and the current shape of the target object by using a preset step size or a preset quantity of steps based on a preset gradient descent algorithm.

In an embodiment of this application, the image processing apparatus further includes an annotation unit. The annotation unit is configured to annotate the target object based on the target pose and the target shape.

According to a third aspect, an embodiment of this application provides an electronic device, including a memory configured to store computer program instructions and a processor configured to execute the program instructions. When the computer program instructions are executed by the processor, the electronic device is enabled to implement the method in any one of the first aspect or the implementations of the first aspect.

According to a fourth aspect, an embodiment of this application provides a computer-readable storage medium. The computer-readable storage medium includes a stored program. When the program is executed by at least one processor, a device in which the computer-readable storage medium is located is controlled to implement the method in any one of the first aspect or the implementations of the first aspect.

According to a fifth aspect, an embodiment of this application provides a computer program product. The computer program product includes executable instructions. When the executable instructions are executed by at least one processor, a computer is enabled to implement the method in any one of the first aspect or the implementations of the first aspect.

According to a sixth aspect, an embodiment of this application provides a vehicle. The vehicle is equipped with a driving system or a navigation system, the driving system or the navigation system includes image information, and the image information is obtained according to the method in any one of the first aspect or the implementations of the first aspect.

According to the image processing method provided in embodiments of this application, the initial pose of the target object is determined based on the point cloud of the target object, and the initial shape of the target object is determined based on the shape prior information. After the initial pose and the initial shape are obtained, the initial pose and the initial shape are optimized based on the target mask and the point cloud of the target object, to obtain the target pose and the target shape of the target object. The initial shape obtained based on the shape prior information facilitates optimization processing. In addition, both the target pose and the target shape obtained through optimization processing based on the initial shape and the initial pose have good data generalization and excellent precision, and precision of the target pose and the target shape obtained according to the image processing method provided in embodiments of the present invention has good stability.

### BRIEF DESCRIPTION OF DRAWINGS

FIG. 1 is a flowchart of an image processing method according to an embodiment of this application;
FIG. 2 is a flowchart of obtaining a point cloud of a target object according to an embodiment of this application;
FIG. 3 is an optimization processing flowchart according to an embodiment of this application;
FIG. 4 is a flowchart of an image processing method according to an embodiment of this application;
FIG. 5 is an effect diagram of 3D bounding box annotation performed according to an image processing method according to an embodiment of this application;
FIG. 6 is an effect diagram of voxel occupancy grid annotation performed according to an image processing method according to an embodiment of this application;
FIG. 7 is a diagram of comparison between voxel occupancy grid annotation performed according to an image processing method according to an embodiment of this application and that performed according to a method in a conventional technology;
FIG. 8 is a diagram of a structure of an image processing apparatus according to an embodiment of this application;
FIG. 9 is a diagram of a structure of an image processing apparatus according to an embodiment of this application; and
FIG. 10 is a diagram of a structure of an electronic device according to an embodiment of this application.

### DESCRIPTION OF EMBODIMENTS

The embodiments described below with reference to the accompanying drawings are examples, and are intended to explain the present invention only, but should not be construed as a limitation on the present invention.

An autonomous driving perception architecture is an eye of autonomous driving and a basic guarantee for autonomous driving safety performance. An existing 3D perception algorithm needs a large amount of labeled data to train a deep learning model to understand a 3D scene. However, object annotation in 3D space is an extremely expensive and labor-costly job.

In some technologies, an annotation method is usually a rule-based or pre-trained-model method for a specific dataset. This usually brings good effect for the specific dataset or a specific data annotation mode. When a real dataset is introduced or data that is greatly different from that in training is introduced, quality of a 3D bounding box generated by an algorithm decreases quickly, or even a model becomes invalid.

In addition, existing annotation methods all focus on resolving an automatic annotation problem of the 3D bounding box, and do not support annotation at a finer granularity, for example, a voxel occupancy grid. Although some algorithms can also generate a three-dimensional shape of a target, shape quality of the target is poor because the target needs virtual data for training and data distribution of the virtual data is different from that of real data.

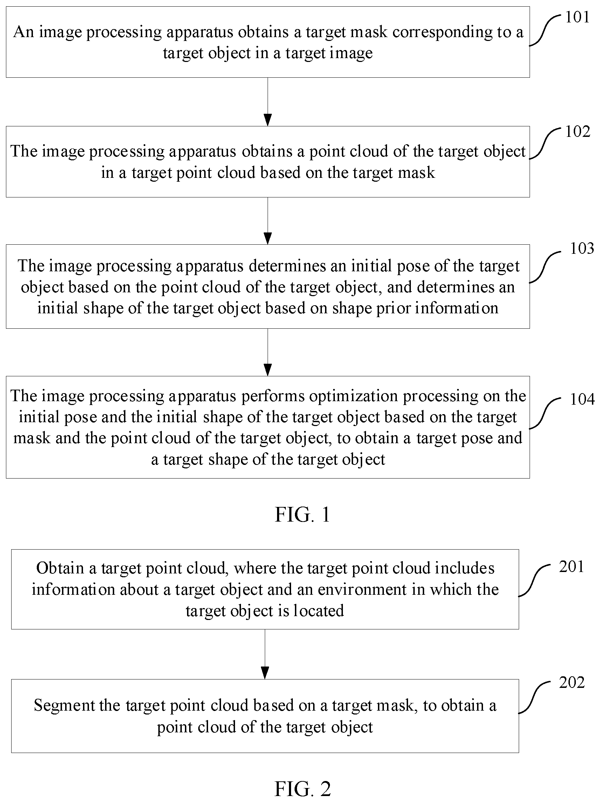

With reference to FIG. 1, an embodiment of this application provides an image processing method, applied to an image processing apparatus, and including the following steps:
S101: The image processing apparatus obtains a target mask corresponding to a target object in a target image.

In this embodiment of this application, the image processing apparatus obtains the target image through an image capturing device, where the target image includes an image of the target object. In some implementations, the image capturing device may be a camera, and the target image is an image shot by the camera. The target image may further include an image of an environment in which the target object is located. The target object is a to-be-processed object or a to-be-annotated object. The target object may be a vehicle, a crowd, a building, a construction facility, or the like. After obtaining the target image, the image processing apparatus may perform segmentation processing on the target image to obtain the image of the target object, so that the target mask corresponding to the target object may be obtained based on the image of the target object. Certainly, the image processing apparatus may alternatively directly obtain the target mask of the target object in the target image from another device or another model. In some embodiments, the image processing apparatus may obtain the target image, and transmit, to the another device or the another model, the target image and information about the target object that needs to be annotated, so that the target mask corresponding to the target object in the target image may be obtained.

When segmenting the target image, the image processing apparatus needs to first recognize the target object from the target image to obtain the target mask of the target object. In this case, in some embodiments, a user may annotate the target object in the target image. In this way, the image processing apparatus may recognize the target object from the target image based on prompt information that is annotated by the user and that is in the target image, obtain the image of the target object by segmenting the target image, and obtain, based on the image of the target object, the target mask corresponding to the target object.

Alternatively, in some embodiments, a category of the target object that needs to be annotated may be preset in the image processing apparatus. In this case, the image processing apparatus may recognize the target object from the target image based on the category of the target object, obtain the image of the target object through segmentation, and obtain, based on the image of the target object, the target mask corresponding to the target object. In a possible implementation, the image processing apparatus may recognize the target object from the target image based on the category of the target object by using a preset algorithm. For example, a 2D perception algorithm, an image recognition algorithm, or another algorithm may be used. This is not limited in this application. The category of the target object is a category that the target object belongs to, and the category includes a vehicle, a person, an animal, a building, a traffic sign, and the like.

In a possible implementation, to reduce complexity of obtaining the target mask corresponding to the target object, a pre-trained target network model is used to obtain the target mask corresponding to the target object. That is, the target network model is a model that is pre-trained and that is used to recognize mask information of the target object. In some target network models, the image processing apparatus needs to first annotate, in the target image, the target object for which a mask needs to be generated. In this case, the image processing apparatus may first annotate the target object in the obtained target image, use the target image with the annotated target object as an input of the target network model, and input the target image into the target network model. The target network model performs corresponding processing on the target object in the target image, to obtain the target mask corresponding to the target object in the target image. In some target network models, for example, an SAM (Segment Anything Model, segment everything model) may be used, and the target image and prompt information of the target object may be input. In other words, the image processing apparatus may use the target image as an input of the target network model, and input the target image into the target network model. The target network model processes the received target image, and in a processing process of the target network model, annotation information of the target object needs to be obtained. In this case, the image processing apparatus may input the prompt information of the target object into the target network model, or the user may input the prompt information of the target object into the target network model. This is not limited in this application.

In a possible implementation, the prompt information of the target object includes a point that belongs to the target object or a bounding box of the target object.

In a possible implementation, the target image may be a 2D image, and the annotation information of the target object includes a point that is of the 2D image and that belongs to the target object or a 2D bounding box of the target object.

In some embodiments, the target network model may be a part of the image processing apparatus, or may be another apparatus or device other than the image processing apparatus. This is not limited in this application.

S102: The image processing apparatus obtains a point cloud of the target object in a target point cloud based on the target mask.

Generally, the target point cloud may be obtained through collection by using a lidar. However, in addition to the point cloud of the target object, the target point cloud collected by the lidar further includes a point cloud of another object. To improve accuracy of an obtained pose of the target object, the image processing apparatus may obtain the point cloud of the target object based on the target mask.

With reference to FIG. 2, in a possible implementation of this step, that the image processing apparatus obtains the point cloud of the target object in the target point cloud based on the target mask specifically includes the following steps:
S201: Obtain the target point cloud, where the target point cloud includes information about the target object and an environment in which the target object is located.

In this embodiment of this application, the target point cloud may be obtained through collection by using the lidar or another device. The image processing apparatus directly or indirectly obtains the target point cloud from the lidar or the another device. That the image processing apparatus indirectly obtains the target point cloud means that the target point cloud is obtained from another apparatus, and the another apparatus obtains the target point cloud from the lidar or the another device. The another device may be at least one of an RGB-D camera, an interferometric synthetic aperture radar, and a device that can generate a point cloud according to an image derivation method.

The target point cloud indicates the information about the target object and the environment in which the target object is located. The target point cloud includes several points, and each point includes 3D information of the point, where the 3D information may be 3D coordinate information. The point cloud of the target object is a point cloud that is in the target point cloud collected by the lidar and that corresponds to the target object.

S202: The image processing apparatus segments the target point cloud based on the target mask, to obtain the point cloud of the target object.

The target mask is 2D mask information, and the point cloud is 3D data. Therefore, the target mask needs to be first converted into 3D mask information, and the image processing apparatus obtains the point cloud of the target object by segmenting the target point cloud based on the 3D mask information. In some possible implementations, the image processing apparatus may convert the target mask into the 3D mask information based on setting parameters of corresponding sensors in a point cloud collection apparatus (for example, a lidar) and a target image collection apparatus (for example, a camera).

In step 202, the image processing apparatus estimates, based on the 2D mask information, a location and a shape of the target object in 3D space. This operation is easy to implement, and the estimated location and the estimated shape of the target object in the 3D space are accurate, which lays a good foundation for subsequent optimization.

The point cloud that is of the target object and that is obtained by segmenting the target point cloud based on the target mask includes a noise point cloud. To obtain a more accurate point cloud of the target object, in some implementations, after step S202, the image processing method further includes the following steps:
S203: The image processing apparatus denoises the point cloud of the target object.

The point cloud of the target object includes the noise point cloud. Therefore, the image processing apparatus needs to remove the noise point cloud from the point cloud of the target object, to obtain a denoised point cloud of the target object.

In a possible implementation of step S203, that the image processing apparatus denoises the point cloud of the target object includes: The image processing apparatus removes a cloud point whose distance from a center point of the point cloud of the target object is greater than a first threshold. In this way, the denoised point cloud of the target object can be obtained. The denoised point cloud of the target object has higher accuracy.

The first threshold may be a preset threshold, and may be specified by a skilled person according to an actual requirement. The center point of the point cloud of the target object may be a point cloud located in a median of a projection depth. Each point in the point cloud of the target object is a point in 3-dimensional space, and information about the point includes the 3D coordinate information. The 3D coordinate information may be coordinate information in a preset point cloud coordinate system.

In a possible implementation, that the image processing apparatus denoises the point cloud of the target object includes: denoising the point cloud of the target object according to a voxel filtering method or a normal vector-based method.

S103: The image processing apparatus determines an initial pose of the target object based on the point cloud of the target object, and determines an initial shape of the target object based on shape prior information.

The image processing apparatus performs calculation based on the point cloud of the target object, to obtain the initial pose of the target object.

In a possible implementation of step S103, obtaining the initial pose of the target object based on the point cloud of the target object includes:
performing averaging processing on the point cloud of the target object, to obtain the initial pose of the target object.

The initial pose of the target object includes an initial location and an initial posture of the target object. In this implementation, an average value of all points in the point cloud of the target object is calculated based on each corresponding dimension, to obtain coordinate information of the center point of the target object, and the coordinate information of the center point of the target object is used as the initial location of the target object. An initial orientation angle of the target object may be any randomly specified value from 0 to 2π. The initial location and the initial orientation angle constitute the initial pose of the object. For example, if a point in the point cloud of the target object corresponds to a point in 3-dimensional space, averaging processing is performed on all points in the point cloud of the target object in a first dimension (for example, an X dimension) to obtain *x̅*, averaging processing is performed on all points in the point cloud of the target object in a second dimension (for example, a Y dimension) to obtain *y̅*, and averaging processing is performed on all points in the point cloud of the target object in a third dimension (for example, a Z dimension) to obtain *z̅*, where the initial location of the target object is (*x̅*, *y̅*, and *z̅*). (*x̅*, *y̅*, and *z̅*) is combined with a randomly initialized orientation angle to obtain the initial posture of the target object. In this step, the point cloud of the target object may be a point cloud of the target object before denoising, or may be a point cloud of the target object after denoising. When averaging processing is performed on the point cloud of the target object after denoising, the obtained initial pose of the target object has higher accuracy.

The image processing apparatus obtains preset shape prior information corresponding to the target object, and determines the initial shape of the target object based on the shape prior information.

The shape prior information is prior information of a target shape of an object. The shape prior information can indicate a prior shape of an object, and the prior shape is a prior fuzzy cognition of the target shape of the object based on a training dataset or past experience data. For example, shape prior information of a vehicle may indicate a prior shape of the vehicle, and the prior shape of the vehicle may be a fuzzy vehicle shape, but a final shape of the vehicle needs to be obtained through optimization based on the fuzzy cognition. The image processing apparatus may specify the shape prior information based on the object category. Objects of a same category correspond to same shape prior information. In some embodiments, the shape prior information may include an SDF (Signed Distance Function, signed distance function) value. In a possible implementation, the shape prior information may include a function indicating a shape of an object. For example, the shape prior information includes a vector expression. In a possible implementation, the shape prior information may include an implicit expression vector of the SDF value. A vector dimension of the implicit expression vector of the SDF value may be a preset dimension. In some possible implementations, the image processing apparatus may obtain, based on the category of the target object, a vector expression corresponding to the target object, and obtain the initial shape of the target object based on a preset initial value of the vector expression corresponding to the target object. Each vector dimension of the implicit expression vector of the SDF value represents one shape parameter. An implicit expression vector of a three-dimension SDF value is used as an example. One vector dimension represents a length, another vector dimension represents a volume, and the last vector dimension represents a shape.

In a possible implementation, the shape prior information includes the SDF (Signed Distance Function, signed distance function) value, and the shape prior information is obtained based on a preset dimension reduction algorithm.

The SDF value is a value having a plurality of dimensions. Therefore, to improve efficiency of obtaining the shape of the target object, dimension reduction processing needs to be performed on the SDF value based on a dimension reduction algorithm, to obtain an implicit expression vector of the SDF value having a preset dimension.

In a possible implementation, the shape prior information may include a vector expression having a preset dimension, for example, include an implicit expression vector of an SDF value having a preset dimension. In a possible implementation, the dimension reduction algorithm includes a PCA (Principal Component Analysis, principal component analysis) algorithm. It should be noted that the dimension reduction algorithm may alternatively be another dimension reduction algorithm (for example, a backward feature elimination algorithm or an independent component analysis algorithm). This is not limited in this application.

In a possible implementation, that the image processing apparatus determines the initial shape of the target object based on the shape prior information includes: using an average shape of the shape prior information as the initial shape of the target object.

In a possible implementation, the average shape of the shape prior information is a shape represented by an average value of a plurality of pieces of shape prior information. The plurality of pieces of shape prior information is shape prior information corresponding to a plurality of samples. For example, there are n samples, each sample corresponds to one piece of shape prior information, and the n samples correspond to n pieces of shape prior information. Then, an average value of the n pieces of shape prior information is used as the average shape of the shape prior information.

In a possible implementation, that the image processing apparatus determines the initial shape of the target object based on the shape prior information includes: The image processing apparatus obtains an initial value of the shape prior information, and obtains the initial shape of the target object based on the initial value of the shape prior information.

To reduce complexity of the image processing method, an initial value may be specified for shape prior information corresponding to various categories of objects, and the initial shape of the object is obtained based on the initial value. In some embodiments, the initial value of the shape prior information may be a specified value, for example, a default value after the shape prior information is initialized. The initial value that is of the shape prior information and that is obtained by the image processing apparatus may be an initial value of the obtained implicit expression vector of the SDF value. After the initial value of the shape prior information is obtained, the initial shape that is of the target object and that is indicated based on the initial value of the shape prior information can be obtained. In some possible implementations, there is a preset correspondence between the shape prior information of the object and the shape of the object, and a current shape of the target object can be obtained based on the preset correspondence and current shape prior information of the object. In a possible implementation, the preset correspondence may be preset by a person skilled in the art before delivery of the image apparatus.

The image processing apparatus may obtain, based on the category of the target object, the shape prior information corresponding to the target object. Alternatively, the image processing apparatus may obtain, from another device or another model based on the category of the target object, the shape prior information corresponding to the target object.

In some possible implementations, when segmenting the target image, the image processing apparatus needs to first recognize the category of the target object from the target image, and then obtain, based on the category of the target object, the shape prior information corresponding to the target object.

In some possible implementations, the category of the target object that needs to be annotated may be preset in the image processing apparatus. The image processing apparatus obtains the category of the target object from preset information, and obtains, based on the category of the target object, the shape prior information corresponding to the target object.

In some possible implementations, the image processing apparatus inputs the category of the target object into another device or another model, and obtains both prior information of the target object and a shape corresponding to the prior information that are fed back by the another device or the another device.

In a possible implementation, to reduce complexity of obtaining the shape prior information corresponding to the target object, a pre-trained network model is used to obtain the shape prior information corresponding to the target object. In some embodiments, the target network model may be a shape model. The image processing apparatus obtains the initial value of the shape prior information from the shape model based on the category of the target object. The initial value of the shape prior information may be a default value preset in the shape model. The shape model obtains, based on a correspondence between preset shape prior information and a shape, a shape corresponding to initial shape prior information, where the shape is the initial shape of the target object.

In a possible implementation, a shape model obtaining process is as follows: A 3D model collection apparatus collects several categories of 3D models, and each category of 3D model includes several 3D model samples. A calculation processing apparatus converts each collected 3D model sample into an expression format of the SDF value. The calculation processing apparatus performs dimension reduction processing on expression formats of SDF values of several 3D model samples of each category one by one based on the PCA algorithm, that is, reduces, by using the PCA algorithm, a dimension of each 3D model sample expressed by an SDF value to a target dimension. In some embodiments of this application, the target dimension may be five dimensions. It should be noted that, that the target dimension is five dimensions is merely an example for description, and is not specifically limited. That is, the target dimension may be another value (for example, three dimensions).

An initial value of the preset shape prior information in the shape model is an average value of several 3D model samples that are of a corresponding category, that are expressed based on the SDF value, and that are learned by using the PCA algorithm. In addition, to facilitate understanding of a driver, the shape model needs to present the shape prior information as the shape of the object. In some embodiments of this application, the shape model may pre-store initial values of various categories of shape prior information, the correspondence between the shape prior information and the shape, and the shape of the object. After the shape prior information is obtained, the shape of the object is obtained based on a correspondence between the pre-stored shape prior information and the shape. In some other embodiments of this application, the shape model may pre-store the initial value of the shape prior information and the correspondence between the shape prior information and the shape. After the shape prior information is obtained, a corresponding shape is calculated or drawn based on the correspondence between the pre-stored shape prior information and the shape. It should be noted that data pre-stored in the shape model is merely an example for description, and does not constitute a specific limitation on a related parameter in the shape model. In addition, the shape model may be trained before delivery, and may be directly used after delivery. Alternatively, the shape model may be obtained through further optimization and training in a use process. That is, a prior initial value of a shape corresponding to each category in the shape model may be further optimized and periodically updated in the use process.

S104: The image processing apparatus performs optimization processing on the initial pose and the initial shape of the target object based on the target mask and the point cloud of the target object, to obtain a target pose and a target shape of the target object.

To improve accuracy of a shape and a pose of the target object, optimization processing needs to be performed after the initial shape of the target object is obtained, so that the target pose and the target shape of the target object can be obtained. In some possible implementations, the image processing apparatus uses the initial pose and the initial shape of the target object as a start point, updates the shape and the pose of the target object by using an iterative algorithm, and performs optimization check by using a target optimization function. In a possible implementation, the target optimization function indicates a relationship between a current shape as well as a current pose of the target object and a shape as well as a pose in an ideal state.

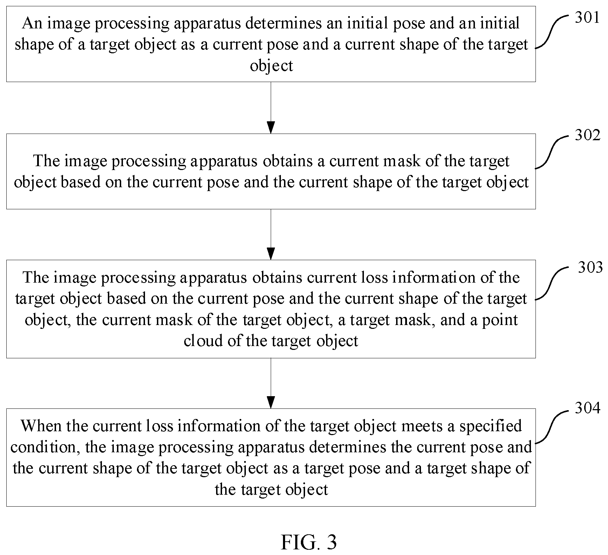

With reference to FIG. 3, in a possible implementation of step S104, that the image processing apparatus performs optimization processing on the initial pose and the initial shape of the target object based on the target mask and the point cloud of the target object, to obtain the target pose and the target shape of the target object includes the following steps:
S301: The image processing apparatus determines the initial pose and the initial shape of the target object as the current pose and the current shape of the target object.

S302: The image processing apparatus obtains a current mask of the target object based on the current pose and the current shape of the target object.

To reduce complexity of optimization processing, the image processing apparatus performs dimension reduction processing based on the current shape and the current pose of the target object, and converts 3D pose information and shape information into 2D mask information currently corresponding to the target object. Then, current mask information and target mask information are input into an optimization function for optimization check. In some possible implementations, dimension reduction processing may be projection processing, and projection processing may be performed based on a rendering algorithm.

In some possible implementations, the optimization function may be as follows: $p * , s * = arg {min}_{p , s} E \left(Y, {X}_{f}, p, s\right)$

p^{∗}and s^{∗} respectively represent the target pose and the target shape of the target object, **p** and **s** respectively represent the current pose and the current shape of the target object, *Y* represents the current mask of the target object in the current pose and the current shape, and E is loss information. The loss information E includes three parts: a mask alignment loss, a point cloud alignment loss, and a ground alignment loss.

In a possible implementation of step S302, obtaining the current mask of the target object based on the current pose and the current shape of the target object includes: obtaining the current mask of the target object based on a differentiable 3D rendering algorithm based on the SDF value, and the current pose and the current shape of the target object.

The differentiable 3D rendering algorithm is as follows: $π \left({p}_{j}\right) = 1 - {\prod }_{x ∈ {R}_{{p}_{j}}} \frac{1}{{e}^{ϕ \left(x\right) ζ} + 1}$

*Pⱼ* represents a pixel of an image plane, π(pⱼ) ∈ (0,1) represents a rendering value of the pixel, a set 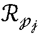 represents a sampling point on a light ray passing through a camera optical center and the pixel *pⱼ*, ϕ(x) represents an SDF value of a sampling point x, and ζ represents a parameter of the rendering algorithm, and is manually specified. If a light ray passes through a surface of an object, it means that an SDF value of at least one point in sampling points on the light ray is a positive number, and finally and consequently, a rendering value of the pixel is close to 1. Otherwise, it means that SDF values of sampling points on the light ray are all negative numbers, and consequently, a rendering value of the pixel is close to 0.

The shape prior information (for example, an SDF value) corresponding to the shape of the target object is substituted into the formula, to obtain a current mask corresponding to a shape of a current object.

S303: The image processing apparatus obtains current loss information of the target object based on the current pose and the current shape of the target object, the current mask of the target object, the target mask, and the point cloud of the target object.

In a possible implementation, the loss information includes at least one of mask alignment loss information, point cloud alignment loss information, and height alignment loss information. In some preferred implementations, the loss information includes at least the mask alignment loss information.

The mask alignment loss information is used to measure a distance between the target mask segmented by the SAM and the current mask rendered by the current pose and the current shape. The mask alignment loss is defined as follows: ${E}_{mask} = 1 - \frac{2 \left|\left({Y}_{proj}∗O\right)∩Y\right|}{\left|{Y}_{proj}∗O\right| + \left|Y\right|}$

*Yₚᵣₒⱼ* represents the current mask obtained by using the rendering algorithm, *Y* represents the target mask obtained by using the SAM, and *O* represents a blocking mask of the target object, and may be obtained through calculation based on the target mask obtained by using the SAM.

The point cloud alignment loss information indicates a degree of alignment between an object represented by the current pose and the current shape of the target object and the point cloud of the target object. The point cloud alignment loss is defined as follows: ${E}_{pc} = {\left‖ϕ\left({X}_{f}\right)\right‖}_{1} + \frac{1}{\left|{\hat{X}}_{f}\right|} {\sum }_{x ∈ {\hat{X}}_{f}} {\left‖x-y\right‖}_{2}^{2}$

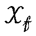 represents points that belong to the target and that are obtained by the target mask from a scene LiDAR point cloud (namely, the target point cloud), that is, 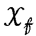 represents points in the point cloud of the target object; 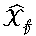 ⊆ 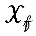 represents a point at which a light ray intersects with an actual surface of the target object through these points; **y** represents an intersection point between the light lay and the surface of the target object in the current pose and the current shape; and *ϕ* represents an SDF value function.

If the mask alignment loss is optimized separately, the shape and the pose of the object are easily caused to fall into a local minimum value, and ultimately practicability of the method is reduced. Therefore, this method further proposes a point cloud alignment loss, to improve practicability of the method.

The height alignment loss information indicates a distance between a ground and a height at which the current pose and the current shape are located. The height alignment loss information is defined as follows: ${E}_{ground} = {\left‖\hat{z}-\frac{\hat{h}}{2}-g\left(\hat{x}, \hat{y}\right)\right‖}_{2}^{2}$

(*x̂*, *ŷ*, *ẑ*) represents a current 3D location of the target, and *ĥ* represents a current height of the object, where the current height may be obtained based on the shape of the object. A ground height function *z* = *g*(*x̂*, *ŷ*) is obtained based on a RANSAC (Random Sample Consensus, random sample consensus) algorithm in combination with the target point cloud.

To ensure that the target object is located on the ground, embodiments of this application provide a height alignment loss.

It should be understood that, in this application, a distance indicates a difference value or a difference degree, instead of a physical concept of a length. For example, the mask alignment loss information is used to measure a difference value or a difference degree between the target mask segmented by the SAM and the current mask rendered by the current pose and the current shape, and the height alignment loss information indicates a difference value or a difference degree between the ground and the height at which the current pose and the current shape are located.

In a possible implementation of this application, the loss information is defined as follows: $E = a {E}_{mask} + {bE}_{pc} + {cE}_{ground}$

E is the loss information, a is a weight of the mask alignment loss information, b is a weight of the point cloud alignment loss information, and c is a weight of the height alignment loss information.

S304: When the current loss information of the target object meets a specified condition, the image processing apparatus determines the current pose and the current shape of the target object as the target pose and the target shape of the target object.

To obtain the target pose and the target shape, the image processing apparatus needs to specify an optimization objective. The optimization objective may be embodied based on the specified condition. In some implementations, the optimization objective may be embodied based on a preset optimization function. Based on the preset condition, the image processing apparatus can learn whether the current pose and the current shape of the target object need to be further optimized. If further optimization is needed, the optimization steps are repeated. If no further optimization is needed, that is, the specified condition is met, the current pose and the current shape of the target object are determined as the target pose and the target shape of the target object.

In a possible implementation of this application, the specified condition is that the loss information corresponding to the target object in the current pose and the current shape is converged. That is, a value of the loss information corresponding to the target object in the current pose and the current shape is minimum. The specified condition may be embodied based on an optimization function of the target object. The optimization function may be as follows: $p * , s * = arg {min}_{p , s} E \left(Y, {X}_{f}, p, s\right)$

p^{∗} and s^{∗} respectively represent the target pose and the target shape of the target object, **p** and **s** respectively represent the current pose and the current shape of the target object, *Y* represents the current mask of the target object in the current pose and the current shape, and E is loss information. The loss information E includes three parts: a mask alignment loss, a point cloud alignment loss, and a ground alignment loss.

In a possible implementation of this application, the specified condition is as follows: Loss information of the target object in the current pose and the current shape is first loss information, loss information of the target object in a previous pose and a previous shape is second loss information, and a difference value between the first loss information and the second loss information is less than a specified threshold. In a preferred implementation, the first loss information is less than the second loss information, and a value obtained by subtracting the first loss information from the second loss information is less than the specified threshold.

In a possible implementation of step S104, step S104 further includes the following:
When the current loss information of the target object does not meet the specified condition, update the current pose and the current shape of the target object based on a preset update manner, and repeat the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

In this implementation, updating the current pose and the current shape of the target object based on the preset update manner includes: updating the current pose and the current shape of the target object by using a preset step size or a preset quantity of steps based on a preset gradient descent algorithm.

In this implementation, an SDF implicit expression vector corresponding to location information, the posture, and the shape of the target object is updated with a specified step size based on the preset gradient descent algorithm. The gradient descent algorithm has advantages of wide applicability and strong scalability. Based on the gradient descent algorithm, the target pose and the target shape of the target object can be obtained quickly and effectively, which is helpful to improve calculation efficiency.

In a possible implementation, the gradient descent algorithm may be implemented by using an adaptive moment estimation (Adaptive moment estimation, Adam) optimizer, and the gradient descent algorithm may be a batch gradient descent algorithm, a stochastic gradient descent algorithm, or the like.

In a possible implementation of this application, the current loss information of the target object becomes smaller as the current pose and the current shape of the target object are updated. When the loss information reaches a minimum value, the current pose and the current shape of the target object are the target pose and the target shape.

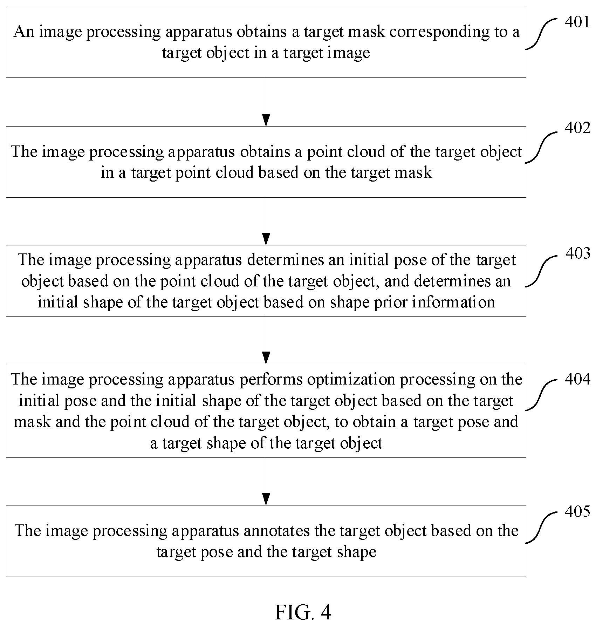

With reference to FIG. 4, an embodiment of this application provides an image processing method, including the following steps:
S401: An image processing apparatus obtains a target mask corresponding to a target object in a target image.

For a specific implementation process of step S401, refer to step S101. Details are not described herein again.

S402: The image processing apparatus obtains a point cloud of the target object in a target point cloud based on the target mask.

For a specific implementation process of step S402, refer to step S102. Details are not described herein again.

S403: The image processing apparatus determines an initial pose of the target object based on the point cloud of the target object, and determines an initial shape of the target object based on shape prior information.

For a specific implementation process of step S403, refer to step S103. Details are not described herein again.

S404: The image processing apparatus performs optimization processing on the initial pose and the initial shape of the target object based on the target mask and the point cloud of the target object, to obtain a target pose and a target shape of the target object.

For a specific implementation process of step S404, refer to step S104. Details are not described herein again.

S405: The image processing apparatus annotates the target object based on the target pose and the target shape.

After obtaining the target pose and the target shape, the image processing apparatus may automatically annotate, in target space, the target pose and the target shape that correspond to the target object. In some embodiments, the image processing apparatus divides the target space into several grids. A location and a posture of the target object can be annotated from a corresponding grid in the target space based on the target pose of the target object, and then a shape corresponding to the target object is annotated at the grid location and its surrounding grids based on the target shape, so that a target location can be annotated in the target space. In a possible implementation, the image processing apparatus can annotate, based on the target pose of the target object, a point corresponding to the location and the posture of the target object in the target space (the point is a point corresponding to a center point of the target object in the target space), and then annotate, around the point corresponding to the center point of the target object in the target space based on the target shape of the target object, points that constitute the target shape. In a possible implementation, the image processing apparatus may further annotate, in the target space by using a bounding box annotation algorithm and based on the target shape and the target pose of the target object, a bounding box corresponding to the target object.

In a possible implementation of this embodiment, the image processing apparatus annotates the target object in 3D space based on the target pose and the target shape. For example, the image processing apparatus annotates a 3D bounding box and a category of the target object in the 3D space based on the target pose and the target shape. The image processing apparatus may further annotate the target object in a voxel occupancy grid form in the 3D space based on the target pose and the target shape.

According to the image processing method provided in this embodiment of this application, the initial pose of the target object is obtained based on the point cloud of the target object, and the initial shape of the target object is determined based on the shape prior information. After the initial pose and the initial shape are obtained, the initial pose and the initial shape are optimized based on the target mask and the point cloud of the target object, to obtain the target pose and the target shape of the target object. The initial shape obtained based on the shape prior information facilitates optimization processing. In addition, both the target pose and the target shape obtained through optimization processing based on the initial shape and the initial pose have good data generalization and excellent precision, and precision of the target pose and the target shape obtained according to the image processing method provided in this embodiment of the present invention has good stability.

In the method provided in the present invention, an object segmentation result and a small quantity of vehicle CAD (Computer Aided Design, computer aided design) models are used as prior information, and an accurate 3D pose and shape are generated according to an iterative optimization method. Therefore, according to the technical solution provided in this embodiment of the present invention, an automatic or semi-automatic annotation solution can be provided for various data annotation requirements related to autonomous driving perception without ground truth information of a target data domain.

To better understand effect of the image processing method provided in this embodiment of this application, a disclosed KITTI dataset is used for validation in this application.

The KITTI dataset is jointly created by the Karlsruhe Institute of Technology in Germany and the Toyota Technological Institute in America, and is currently the largest computer vision algorithm evaluation dataset in the world for autonomous driving scenarios. The dataset is used to evaluate performance of computer vision technologies such as a stereo (stereo) image, an optical flow (optical flow), visual odometry (visual odometry), 3D object detection (object detection), and 3D tracking (tracking) in vehicle-mounted environments. KITTI includes real image data collected in urban, rural, highway, and other scenarios. Each image includes a maximum of 15 vehicles and 30 pedestrians, and further includes various degrees of occlusion and truncation. The entire dataset includes 389 pairs of stereo images and optical flow diagrams, a visual odometry sequence of 39.2 km, and more than 200k images with 3D annotated objects, and is sampled and synchronized at a frequency of 10 Hz.

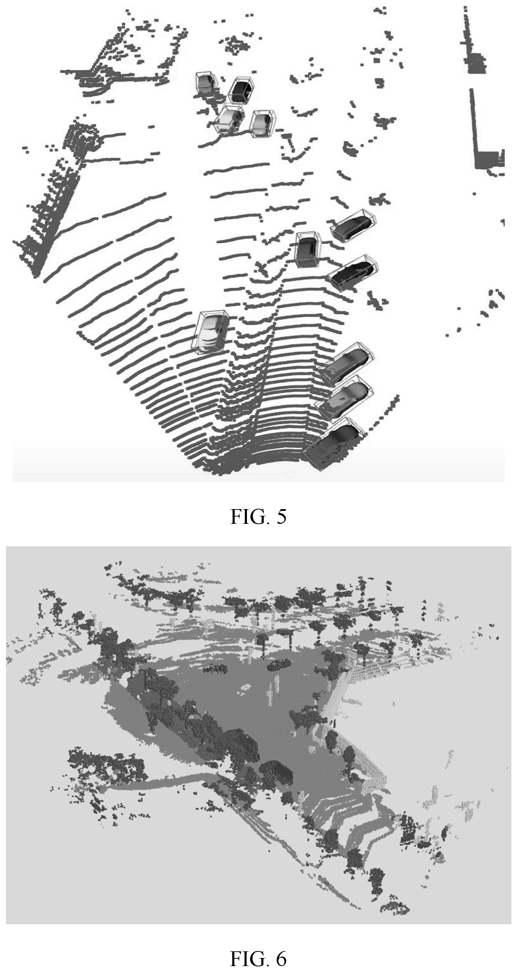

With reference to FIG. 5, in a validation process, for automatic annotation of a 3D bounding box, the present invention uses average precision (AP_{BEV}) of a bird's eye view (Bird's Eye View, BEV) and average precision (AP_{3D}) of the 3D bounding box as measurement standards. During generalization comparison, the invention uses a NuScenes detection score (NDS) and mean average precision (mAP). Note that a larger value of the indicator indicates better performance.

With reference to FIG. 6, generalization and fine-grained annotation of the present invention are validated by using a disclosed NuScenes dataset. This is a large-scale multimodal dataset for 3D detection and map segmentation. The dataset is divided into 700/150/150 scenes for training/validation/testing. The dataset includes data from a plurality of sensors, including six cameras, one lidar, and five radars. For a camera input, each frame includes six views of a surrounding environment at a specific timestamp. The present invention adjusts an input view to a resolution of 256x704, and voxelizes the point cloud into 0.075 m and 0.1 m for detection and segmentation respectively.

By using the disclosed dataset for validation, the following conclusions can be drawn:
Beneficial effect 1: The image processing method provided in this embodiment of this application achieves optimal performance in quality of a generated pseudo label.

When the pseudo label is directly used for comparison with ground truth data, it can be seen from an upper part of Table 1 that, in the present invention, a test model on the KITTI dataset achieves an optimal result in an automatic annotation task of 3D object detection.

VS3D (weakly supervised 3D object detection, weakly supervised 3D object detection) in Table 1 is a weakly supervised 3D object detection model based on the point cloud. The VS3D proposes an unsupervised 3D object candidate module (Unsupervised 3D Object Proposal Module, UPM), and the UPM uses geometric and density properties of a laser point cloud to search for a high-confidence area that may include the target object. In addition, to obtain a more accurate 3D bounding box, the VS3D further designs a cross-mode transfer learning method: A point cloud-based detection network is considered as a student, and learns knowledge from an existing pre-trained teacher image detection network. A 3D object proposal generated by the UPM is projected onto a paired image and classified by a teacher network, and then a student network simulates teacher's behavior during training. However, limitations of a VS3D framework are also obvious. Firstly, in the VS3D framework, a pre-trained 2D object detection model is needed. Therefore, when to-be-annotated data is inconsistent with pre-trained data, performance of an object detection network deteriorates due to a domain difference, and ultimately and consequently performance of a 3D detection grid deteriorates. Secondly, the VS3D distills information from a 2D object detection teacher network, and lacks a 3D supervision signal. As a result, performance of 3D detection is poor, and practical application is very limited.

An SDFLabel (signed distance fields Label, which is a signed distance field label algorithm) in Table 1 includes a deep SDF network pre-trained on a virtual dataset, and a RANSAC algorithm. This algorithm proposes a new SDF-based differentiable rendering function to train the deep SDF network to encode a to-be-annotated object. An input of the deep SDF network is an RGB (red green blue, red green blue) image block of the object, and an output of the deep SDF network is an implicit expression vector of an SDF value of the object in the image. During annotation, the algorithm first obtains a 2D bounding box of the target object and a point cloud that belongs to the object in the point cloud, and inputs the 2D bounding box into the deep SDF network to obtain an SDF expression of the object in the box. Finally, a 3D pose of the target object is estimated by using the RANSAC algorithm in combination with the output of the deep SDF network. This technical solution heavily depends on quality of the pre-trained deep SDF network. However, training of the deep SDF network is performed on a virtual dataset, and there is usually a large gap between the virtual dataset and data in a real world. As a result, prediction quality of a shape of the target object in a real dataset is not high. This directly affects quality of a final pseudo label. In addition, the SDFLabel is not an end-to-end algorithm, and a prediction result of the deep SDF network is fixed in subsequent RANSAC optimization. This further reduces accuracy of the 3D bounding box.

FGR (Frustum Aware Geometric Reasoning, frustum aware geometric reasoning) in Table 1 automatically annotates the 3D bounding box by using 2D bounding box hints and sparse point clouds. The FGR includes two parts: coarse 3D point cloud segmentation and 3D bounding box estimation. In a coarse 3D segmentation phase, the FGR proposes a context-aware adaptive area growth method. This method uses context information and adaptively adjusts a threshold to coarsely segment the target point cloud. In a 3D bounding box estimation phase, the FGR designs an anti-noise framework to estimate a boundary rectangle in a bird's eye view and locate key vertices. Then, a rule-based iterative method is used to estimate the 3D bounding box. An object bounding box used by the FGR is not a common object detection box, but a complete object box with occlusion information. The object bounding box usually includes some object size information. A current 2D object bounding box and a detection algorithm cannot be used as an input of the FGR. This limits actual application of the FGR. When predicting rotation information of the 3D bounding box, the FGR cannot resolve a problem of flipping the bounding box. Therefore, ground truth information of object rotation is needed. In addition, the FGR uses a rule-based algorithm to estimate a 3D pose of an object. This results in poor generalization performance of the FGR.

To overcome a problem of too much noise in the point cloud, LAD (Lifting 2d object locations to 3d and Discounting Lidar outliers, which is a method of lifting a 2d object to 3d and removing a noise point cloud) in Table 1 uses a self-supervised method based on template matching. Specifically, a model first obtains mask information of a to-be-annotated object by using a mask region-based convolutional neural network (Mask Region-based Convolutional Neural Network, Mask R-CNN), and obtains, in the point cloud based on the mask, a point cloud that belongs to the object and has noise. A LAD framework includes two parts: a point cloud segmentation network and a 3D pose regression network. The LAD uses a fixed 3D model as a template to provide a supervised signal to train the point cloud segmentation network and the 3D pose regression network. In addition, the LAD can use video timing information to refine the pseudo label. This solution uses a self-supervised method based on template matching for training, and it is important to select a proper template 3D model. This directly determines quality of the supervised signal and finally affects quality of the 3D bounding box. In addition, the 3D model used as a template is fixed during training, and cannot well match various different cases. This also makes the LAD have poor generalization performance.

For ease of comparison, the image processing method provided in this embodiment of this application is named SLF (Segment, Lift and Fit, namely, segment, lift, and fit).

It can be learned from Table 1 that, in examples of moderate and hard, the image processing method (SLF) provided in this embodiment of this application is significantly ahead of an existing automatic annotation algorithm.

In addition, a lower part also shows performance of the SLF in automatic and semi-automatic annotation processes. SLF_{GTmask} indicates an SLF automatic annotation algorithm that uses a ground truth mask as an input, SLFₚₒᵢₙₜ indicates the semi-automatic annotation process, that is, an annotator points out several points that belong to the target object, SLF_{box} indicates the automatic annotation process, that is, the 2D bounding box of the object is obtained by the detection algorithm, and "-" indicates that the indicator does not have a corresponding measurement result. It can be found that the SLF significantly outperforms the existing algorithm in the automatic and semi-automatic annotation processes.

**Table 1**

| Method | AP_{BEV} | | | AP_{3D} | | |
|---|---|---|---|---|---|---|
| | Easy | Moderate | Hard | Easy | Moderate | Hard |
| VS3D | 74.5 | 66.7 | 57.6 | 40.3 | 37.4 | 31.1 |
| SDFLabel | 77.8 | 59.8 | - | 62.3 | 42.2 | - |
| LAD | 75.5 | 76.6 | 68.6 | - | - | - |
| FGR | 93.7 | 77.8 | 70.5 | 91.3 | 77.8 | 70.6 |
| SLF_{GTmask} | 89.2 | 88.9 | 87.1 | 87.6 | 87.8 | 83.8 |
| SLFₚₒᵢₙₜ | 88.5 | 88.5 | 84.2 | 84.8 | 84.9 | 80.8 |
| SLF_{box} | 89.2 | 89.3 | 84.7 | 87.9 | 88.2 | 83.9 |

Beneficial effect 2: According to the image processing method provided in this embodiment of this application, training a 3D detector by using the pseudo label has excellent performance.

According to the image processing method provided in this embodiment of this application, a plurality of different 3D detectors are trained by using the pseudo label, and evaluation is performed. As shown in Table 2, PointPillar is a cylinder-based point cloud target detection algorithm, SECOND (Sparsely Embedded CONvolutional Detection) is a 3D detection algorithm based on sparse convolution, Part-A² (Part-Aware and Aggregation) is a 3D detection algorithm based on partial awareness and aggregation, Voxel R-CNN is a region-based convolutional neural network based on a voxel grid, and GT (Ground truth) is a ground truth. It can be learned from Table 2 that, evaluation indicators of all the five 3D detection algorithms trained on the KITTI dataset by using the 3D pseudo label generated according to the image processing method provided in this embodiment of this application are obviously better than those of the unsupervised automatic annotation algorithm FGR, and may even be compared with performance of a detector trained by using a KITTI ground truth.

**Table 2**

| Annotation | AP_{BEV} | | | AP_{3D} | | |
|---|---|---|---|---|---|---|
| | Easy | Moderate | Easy | Easy | Moderate | Hard |
| Pointpillar | | | | | | |
| GT | 95.7 | 94.3 | 93.2 | 95.7 | 93.6 | 91.4 |
| FRG | 96.5 | 90.2 | 87.1 | 94.9 | 89.4 | 84.8 |
| SLF | 95.3 | 94.1 | 91.1 | 95.2 | 92.1 | 88.8 |

| SECOND | | | | | | |
|---|---|---|---|---|---|---|
| GT | 95.9 | 94.8 | 93.9 | 95.8 | 94.6 | 91.9 |
| FRG | 95.4 | 88.9 | 86.2 | 95.3 | 88.6 | 85.7 |
| SLF | 95.6 | 94.2 | 91.7 | 95.5 | 92.4 | 89.3 |

| Part-A² | | | | | | |
|---|---|---|---|---|---|---|
| GT | 96.0 | 94.3 | 93.9 | 96.0 | 94.2 | 91.9 |
| FRG | 96.1 | 92.1 | 87.5 | 96.0 | 90.0 | 85.1 |
| SLF | 96.0 | 94.5 | 91.8 | 95.9 | 93.9 | 89.6 |

| Voxel R-CNN | | | | | | |
|---|---|---|---|---|---|---|
| GT | 98.4 | 94.9 | 94.5 | 98.3 | 94.8 | 94.4 |
| FRG | 98.7 | 90.9 | 88.2 | 98.6 | 90.7 | 88.0 |
| SLF | 96.2 | 95.1 | 92.4 | 96.1 | 94.7 | 91.9 |

Beneficial effect 3: According to the image processing method provided in this embodiment of this application, cross-dataset annotation is performed, so that excellent generalization performance can be implemented.

In Table 3, the present invention compares performance of a currently best unsupervised annotation algorithm FGR and a supervised annotation algorithm MTrans (multimodal transformer, which is a multimodal self-attention neural network) on cross datasets. It can be seen from the table that, the FGR is a rule-based annotation algorithm, and therefore has good effect on the KITTI, but cannot obtain an effective measurement result in data (nuScenes) outside a data domain. The Mtrans performs training on the KITTI dataset, and therefore can obtain an excellent result in the KITTI data. However, as described above, the supervised annotation algorithm usually overfits an annotation mode of a specific dataset, and has poor performance in data that has not been seen. The SLF is an unsupervised annotation algorithm and does not need any 3D annotation in advance. According to the mAP indicator, the SLF has obviously better cross-dataset generalization performance than the Mtrans.

**Table 3**

| Method | Training data | AP_{3D} @KITTI | | | UnScenes indicator | | | | | |
|---|---|---|---|---|---|---|---|---|---|---|
| | | Easy | Moderate | Hard | mAP | NDS | mATE | mASE | mAOE | mAOE**⁺** |
| FGR | - | 91.3 | 77.8 | 70.6 | 11.6 | 40.4 | .152 | .188 | .010 | .010 |
| MTrans | KITTI | 99.6 | 99.6 | 97.1 | 45.9 | 49.4 | .358 | .349 | .702 | .225 |
| SLF | - | 87.9 | 88.2 | 83.9 | 57.2 | 55.2 | .372 | .192 | .836 | .113 |

Technical effect 4: Fine-grained 3D automatic annotation has excellent effect.

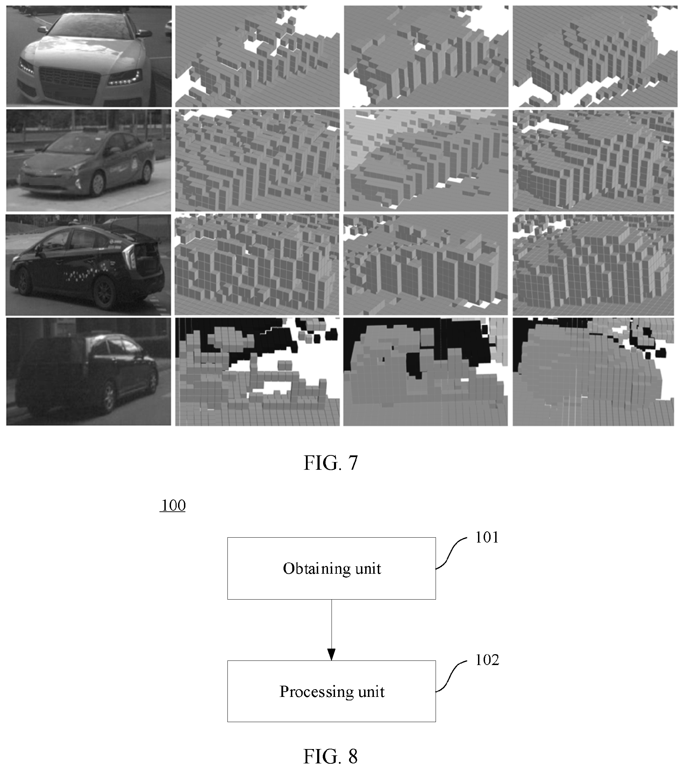

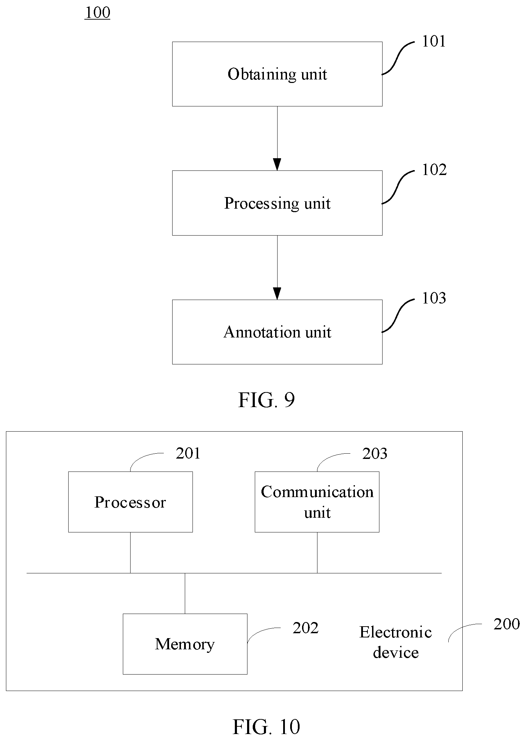

With reference to FIG. 7, in the present invention, a fine-grained annotation experiment is performed in a nuScenes dataset, and specifically, a voxel occupancy grid of the target object is annotated. Because the nuScenes dataset does not provide ground truth information of the voxel occupancy grid, in FIG. 10, the present invention provides a qualitative comparison with an existing annotation method. In FIG. 7, a second column and a third column are real information that is of the voxel occupancy grid and that is provided by OFN (occupancy dataset for nuscenes, occupancy dataset for nuscenes) and OpenOccupancy respectively, and a fourth column is ground truth information annotated by using the SLF. It can be obviously seen that, the voxel occupancy real information annotated by using the SLF can provide more detailed and complete shape information than the existing annotation method.

With reference to FIG. 8, an embodiment of this application further provides an image processing apparatus 100, including an obtaining unit 101 and a processing unit 102. The obtaining unit 101 is configured to obtain a target mask of a target object in a target image. The obtaining unit 101 is further configured to obtain a point cloud of the target object in a target point cloud based on the target mask. The processing unit 102 is configured to: determine an initial pose of the target object based on the point cloud of the target object, and determine an initial shape of the target object based on shape prior information. The processing unit 102 is further configured to perform optimization processing on the initial pose and the initial shape of the target object based on the target mask and the point cloud of the target object, to obtain a target pose and a target shape of the target object.

In an embodiment of this application, the obtaining unit 101 includes a target mask obtaining module. The target mask obtaining module is configured to obtain the target mask of the target object.

In an embodiment of this application, the obtaining unit 101 includes a point cloud obtaining module and a separation module. The point cloud obtaining module is configured to obtain the target point cloud. The separation module is configured to segment the target point cloud based on the target mask, to obtain the point cloud of the target object.

In an embodiment of this application, the obtaining unit 101 further includes a denoising module. The denoising module is configured to denoise an initial point cloud of the target object. In this way, a denoised point cloud of the target object can be obtained.

The target point cloud includes information about the target object and an environment in which the target object is located.

In an embodiment of this application, the denoising module is further configured to remove a cloud point whose distance from a center point of the point cloud of the target object is greater than a first threshold. In this way, a denoised point cloud of the target object can be obtained.

In an embodiment of this application, the processing unit 102 is further configured to perform averaging processing on the point cloud of the target object, to obtain the initial pose of the target object.

In an embodiment of this application, the processing unit 102 is further configured to: obtain an initial value of the shape prior information, and obtain the initial shape of the target based on the initial value of the shape prior information.

In an embodiment of this application, the processing unit 102 is further configured to use an average shape of the shape prior information as the initial shape of the target object.

In an embodiment of this application, the processing unit 102 is further configured to obtain, based on a preset dimension reduction algorithm, the shape prior information corresponding to the target object.

The shape prior information includes an SDF value. The dimension reduction algorithm includes a PCA algorithm.

In an embodiment of this application, the processing unit 102 is further configured to: determine the initial pose and the initial shape of the target object as a current pose and a current shape of the target object, obtain a current mask of the target object based on the current pose and the current shape of the target object, and obtain current loss information of the target object based on the current pose and the current shape of the target object, the current mask of the target object, the target mask, and the point cloud of the target object. When the current loss information of the target object meets a specified condition, the processing unit 102 determines the current pose and the current shape of the target object as the target pose and the target shape of the target object.

In an implementation, the loss information includes at least one of mask alignment loss information, point cloud alignment loss information, and height alignment loss information. The mask alignment loss information indicates a distance between the target mask and the current mask of the target object. The point cloud alignment loss information indicates a distance between the current pose as well as the current shape of the target object and the point cloud of the target object. The height alignment loss information indicates a distance between a ground and a height at which the current pose and the current shape are located.

In an embodiment of this application, the processing unit 102 is further configured to: when the current loss information of the target object does not meet the specified condition, update the current pose and the current shape of the target object based on a preset update manner, and repeat the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

In an embodiment of this application, the processing unit 102 is further configured to obtain the current mask of the target object based on a differentiable 3D rendering algorithm based on the SDF value, and the current pose and the current shape of the target object.

In an embodiment of this application, the processing unit 102 is further configured to update the current pose and the current shape of the target object by using a preset step size or a preset quantity of steps based on a preset gradient descent algorithm.

In a possible implementation of this embodiment, the specified condition is that the loss information corresponding to the target object in the current pose and the current shape is converged.

In a possible implementation of this embodiment, in a possible implementation of this application, the specified condition is as follows: Loss information of the target object in the current pose and the current shape is first loss information, loss information of the target object in a previous pose and a previous shape is second loss information, and a difference value between the first loss information and the second loss information is less than a specified threshold. In a preferred implementation, the first loss information is less than the second loss information, and a value obtained by subtracting the first loss information from the second loss information is less than the specified threshold.

With reference to FIG. 9, in an embodiment of this application, the image processing apparatus 100 further includes an annotation unit 103. The annotation unit 103 is configured to annotate the target object based on the target pose and the target shape.

An embodiment of this application further provides an electronic device, including a memory configured to store computer program instructions and a processor configured to execute the program instructions. When the computer program instructions are executed by the processor, the electronic device is enabled to implement the method provided in any one of the foregoing embodiments.

In an embodiment of this application, the electronic device is a chip. In a possible implementation, the chip is used for cloud processing, to provide a driving basis for a driving system or navigation of a vehicle.

With reference to FIG. 10, in an embodiment of this application, an electronic device 200 may include a processor 201, a memory 202, and a communication unit 203. These components communicate with each other through one or more buses. A person skilled in the art may understand that a structure of the electronic device shown in the figure does not constitute a limitation on embodiments of the present invention. The structure may be a bus structure, or may be a star structure, or may further include more or fewer components than those shown in the figure, or combine some components, or have different component arrangements.

The communication unit 203 is configured to: establish a communication channel, so that the electronic device can communicate with another device; and receive user data sent by the another device or send user data to the another device.

The processor 201 is a control center of the electronic device, is connected to various parts of the entire electronic device through various interfaces and lines, and performs various functions of the electronic device and/or data processing by running or executing a software program, instructions, and/or a module stored in the memory 202 and invoking data stored in the memory. The processor may include an integrated circuit (integrated circuit, IC), for example, may include a single packaged IC, or may include a plurality of connected packaged ICs with a same function or different functions. For example, the processor 201 may include only a central processing unit (central processing unit, CPU). In this implementation of the present invention, the CPU may be a single computing core, or may include a plurality of computing cores.

The memory 202 is configured to store execution instructions of the processor 201. The memory 202 may be implemented by any type of volatile or non-volatile storage device or a combination thereof, for example, a static random access memory (static random access memory, SRAM), an electrically erasable programmable read-only memory (electrically erasable programmable read-only memory, EEPROM), an erasable programmable read-only memory (erasable programmable read-only memory, EPROM), a programmable read-only memory (programmable read-only memory, PROM), a read-only memory (read-only memory, ROM), a magnetic memory, a flash memory, a magnetic disk, or an optical disc.

When the execution instructions in the memory 202 are executed by the processor 201, the electronic device 200 can perform some or all of the steps in the embodiment shown in FIG. 1.

An embodiment of this application provides a computer-readable storage medium. The computer-readable storage medium includes a stored program. When the program is executed by at least one processor, a device in which the computer-readable storage medium is located is controlled to implement the method provided in any one of the foregoing embodiments.

An embodiment of this application further provides a vehicle. The vehicle is equipped with a driving system or a navigation system, the driving system or the navigation system includes image information, and the image information is obtained according to the image processing method provided in any one of the foregoing embodiments. Alternatively, the vehicle includes the image processing apparatus or the electronic device.

An embodiment of this application provides a computer program product. The computer program product includes executable instructions. When the executable instructions are executed on a computer, the computer is enabled to perform the method in the foregoing embodiments.

The technical solutions provided in embodiments of the present invention can be applied to the following scenarios:

### An application scenario 1: automatic annotation for 3D object detection.

As an extremely important part of a visual perception system of an autonomous driving vehicle, 3D object detection may provide a traffic scenario understanding by detecting a common traffic participant object such as a pedestrian or a vehicle. In an existing automatic annotation technology, a small amount of 3D ground truth is needed as startup data, or a 3D pose is predicted based on a self-supervised algorithm. However, the former has a poor cross-dataset generalization capability, and the latter has poor annotation quality. These disadvantages cannot meet an automatic annotation requirement of 3D data. The present invention uses an object shape priori and a 2D hint, and uses gradient descent to directly optimize a 3D pose of an object. This achieves better cross-data generalization and 3D bounding box quality than previous algorithms.

### An application scenario 2: automatic annotation for a voxel occupancy grid.

An image processing technology of the present invention can generate accurate shape information and 3D pose of an object, and can be applied to a 3D voxel occupancy grid prediction task.

The foregoing describes in detail the structure, features, and effects of the present invention according to the embodiments shown in the figures. The foregoing descriptions are merely example embodiments of the present invention, but the present invention does not limit the implementation scope as shown in the figures. Any change made according to the concept of the present invention or modification to an equivalent embodiment with an equivalent change shall fall within the protection scope of the present invention if the change does not go beyond the spirit covered by the specification and the figures.

## Claims

1. An image processing method, comprising:
obtaining a target mask corresponding to a target object in a target image;
obtaining a point cloud of the target object in a target point cloud based on the target mask;
determining an initial pose of the target object based on the point cloud of the target object, and determining an initial shape of the target object based on shape prior information; and
performing optimization processing on the initial pose and the initial shape of the target object based on the target mask and the point cloud of the target object, to obtain a target pose and a target shape of the target object.

2. The image processing method according to claim 1, wherein obtaining the point cloud of the target object in the target point cloud based on the target mask comprises:
obtaining the target point cloud, wherein the target point cloud comprises information about the target object and an environment in which the target object is located; and
segmenting the target point cloud based on the target mask, to obtain the point cloud of the target object.

3. The image processing method according to claim 2, further comprising: denoising the point cloud of the target object.

4. The image processing method according to claim 3, wherein denoising the point cloud of the target object comprises:
removing a point cloud whose distance from a center point of the point cloud of the target object is greater than a first threshold.

5. The image processing method according to any one of claims 1 to 4, wherein obtaining the initial pose of the target object based on the point cloud of the target object comprises:
performing averaging processing on the point cloud of the target object, to obtain the initial pose of the target object.

6. The image processing method according to any one of claims 1 to 4, wherein the shape prior information comprises an SDF value, and the shape prior information is obtained based on a preset dimension reduction algorithm.

7. The image processing method according to claim 6, wherein the dimension reduction algorithm comprises a PCA algorithm.

8. The image processing method according to any one of claims 1 to 4, wherein determining the initial shape of the target object based on the shape prior information comprises: using an average shape of the shape prior information as the initial shape of the target object.

9. The image processing method according to any one of claims 1 to 4, wherein performing optimization processing on the initial pose and the initial shape of the target object based on the target mask and the point cloud of the target object, to obtain the target pose and the target shape of the target object comprises:
determining the initial pose and the initial shape of the target object as a current pose and a current shape of the target object;
obtaining a current mask of the target object based on the current pose and the current shape of the target object;
obtaining current loss information of the target object based on the current pose and the current shape of the target object, the current mask of the target object, the target mask, and the point cloud of the target object; and
when the current loss information of the target object meets a specified condition, determining the current pose and the current shape of the target object as the target pose and the target shape of the target object.

10. The image processing method according to claim 9, wherein the loss information comprises at least one of mask alignment loss information, point cloud alignment loss information, and height alignment loss information, wherein the mask alignment loss information indicates a distance between the target mask and the current mask of the target object, the point cloud alignment loss information indicates a degree of alignment between an object represented by the current pose and the current shape of the target object and the point cloud of the target object, and the height alignment loss information indicates a distance between a ground and a height at which the current pose and the current shape are located.

11. The image processing method according to claim 9, further comprising:
when the current loss information of the target object does not meet the specified condition, updating the current pose and the current shape of the target object based on a preset update manner, and repeating the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

12. The image processing method according to any one of claims 9 to 11, wherein obtaining the current mask of the target object based on the current pose and the current shape of the target object comprises: obtaining the current mask of the target object based on a differentiable 3D rendering algorithm based on an SDF value, and the current pose and the current shape of the target object.

13. The image processing method according to claim 11, wherein updating the current pose and the current shape of the target object based on the preset update manner comprises:
updating the current pose and the current shape of the target object by using a preset step size or a preset quantity of steps based on a preset gradient descent algorithm.

14. The image processing method according to claim 9, wherein the specified condition is that the loss information corresponding to the target object in the current pose and the current shape is converged.

15. The image processing method according to claim 1, further comprising:
annotating the target object based on the target pose and the target shape.

16. An image processing apparatus, comprising:
an obtaining unit, configured to obtain a target mask of a target object in a target image; wherein
the obtaining unit is further configured to obtain a point cloud of the target object in a target point cloud based on the target mask; and
a processing unit, configured to: determine an initial pose of the target object based on the point cloud of the target object, and determine an initial shape of the target object based on shape prior information, wherein
the processing unit is further configured to perform optimization processing on the initial pose and the initial shape of the target object based on the target mask and the point cloud of the target object, to obtain a target pose and a target shape of the target object.

17. The image processing apparatus according to claim 16, wherein the obtaining unit comprises a point cloud obtaining module and a separation module, wherein
the point cloud obtaining module is configured to obtain the target point cloud, wherein the target point cloud comprises information about the target object and an environment in which the target object is located; and
the separation module is configured to segment the target point cloud based on the target mask, to obtain the point cloud of the target object.

18. The image processing apparatus according to claim 17, wherein the obtaining unit further comprises a denoising module, wherein the denoising module is configured to denoise the point cloud of the target object.

19. The image processing apparatus according to claim 18, wherein the denoising module is configured to remove a point cloud whose distance from a center point of the point cloud of the target object is greater than a first threshold.

20. The image processing apparatus according to any one of claims 16 to 19, wherein the processing unit is configured to perform averaging processing on the point cloud of the target object, to obtain the initial pose of the target object.

21. The image processing apparatus according to any one of claims 16 to 19, wherein the processing unit is configured to obtain the shape prior information based on a preset dimension reduction algorithm, wherein the shape prior information comprises an SDF value.

22. The image processing apparatus according to claim 21, wherein the dimension reduction algorithm comprises a PCA algorithm.

23. The image processing apparatus according to any one of claims 16 to 19, wherein the processing unit is configured to use an average shape of the shape prior information as the initial shape of the target object.

24. The image processing apparatus according to any one of claims 16 to 19, wherein
the processing unit is configured to: determine the initial pose and the initial shape of the target object as a current pose and a current shape of the target object, obtain a current mask of the target object based on the current pose and the current shape of the target object, and obtain current loss information of the target object based on the current pose and the current shape of the target object, the current mask of the target object, the target mask, and the point cloud of the target object; and
when the current loss information of the target object meets a specified condition, the processing unit determines the current pose and the current shape of the target object as the target pose and the target shape of the target object.

25. The image processing apparatus according to claim 24, wherein the loss information comprises at least one of mask alignment loss information, point cloud alignment loss information, and height alignment loss information, wherein the mask alignment loss information indicates a distance between the target mask and the current mask of the target object, the point cloud alignment loss information indicates a degree of alignment between an object represented by the current pose and the current shape of the target object and the point cloud of the target object, and the height alignment loss information indicates a distance between a ground and a height at which the current pose and the current shape are located.

26. The image processing apparatus according to claim 24, wherein
the processing unit is further configured to: when the current loss information of the target object does not meet the specified condition, update the current pose and the current shape of the target object based on a preset update manner, and repeat the step of obtaining a current mask of the target object based on the current pose and the current shape of the target object, and the step of obtaining current loss information of the target object based on the current pose and the current shape of the target object, the current mask of the target object, the target mask, and the point cloud of the target object, until the current loss information of the target object meets the specified condition.

27. The image processing apparatus according to any one of claims 24 to 26, wherein the processing unit is further configured to obtain the current mask of the target object based on a differentiable 3D rendering algorithm based on an SDF value, and the current pose and the current shape of the target object.

28. The image processing apparatus according to claim 26, wherein the processing unit is further configured to update the current pose and the current shape of the target object by using a preset step size or a preset quantity of steps based on a preset gradient descent algorithm.

29. The image processing apparatus to claim 24, wherein the specified condition is that the loss information corresponding to the target object in the current pose and the current shape is converged.

30. The image processing apparatus according to claim 16, further comprising:
an annotation unit, configured to annotate the target object based on the target pose and the target shape.

31. An electronic device, comprising a memory configured to store computer program instructions and a processor configured to execute the program instructions, wherein when the computer program instructions are executed by the processor, the electronic device is enabled to implement the method according to any one of claims 1 to 15.

32. A computer-readable storage medium, wherein the computer-readable storage medium comprises a stored program, and when the program is executed by at least one processor, a device in which the computer-readable storage medium is located is controlled to implement the method according to any one of claims 1 to 15.
